**Europäisches Patentamt**

**European Patent Office**

**Office européen des brevets**

(19)

(11) **EP 1 021 468 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(51) Int Cl.7: **C08F 6/00**

(86) Internationale Anmeldenummer:
**PCT/EP98/05927**

(21) Anmeldenummer: **98950047.5**

(22) Anmeldetag: **17.09.1998**

(87) Internationale Veröffentlichungsnummer:
**WO 99/014248 (25.03.1999 Gazette 1999/12)**

(54) **VERFAHREN ZUR VERMINDERUNG VON RESTMONOMEREN IN FLÜSSIGSYSTEMEN UNTER ZUGABE EINES REDOXINITIATORSYSTEMS**

METHOD FOR REDUCING RESIDUAL MONOMERS IN LIQUID SYSTEMS BY ADDING AN OXIDATION-REDUCTION INITIATOR SYSTEM

PROCEDE DE REDUCTION DE LA TENEUR EN MONOMERES RESIDUELS DE SYSTEMES LIQUIDES PAR ADDITION D'UN SYSTEME INITIATEUR D'OXYDO-REDUCTION

(84) Benannte Vertragsstaaten:
**DE FI FR GB NL**

(30) Priorität: **18.09.1997 DE 19741184**

(43) Veröffentlichungstag der Anmeldung:
**26.07.2000 Patentblatt 2000/30**

(73) Patentinhaber: **BASF AKTIENGESELLSCHAFT 67056 Ludwigshafen (DE)**

(72) Erfinder:
- **RUPANER, Robert**
  **D-67158 Ellerstadt (DE)**
- **LAWRENZ, Sven**
  **D-68161 Mannheim (DE)**
- **DOBBELAAR, Johannes**
  **D-67157 Wachenheim (DE)**
- **BAUER, Gerhard**
  **D-69469 Weinheim (DE)**
- **MUESELER, Franz-Josef**
  **D-67435 Neustadt (DE)**
- **KIRCHNER, Werner**
  **D-67434 Neustadt (DE)**

- **MORRISON, Bradley, Ronald**
  **D-68167 Mannheim (DE)**
- **NAHSTOLL, Jürgen**
  **D-67304 Eisenberg (DE)**
- **MEISTER, Martin**
  **D-67434 Neustadt (DE)**
- **BÄCHER, Reinhard**
  **D-67098 Bad Dürkheim (DE)**
- **HÜBINGER, Wolfgang**
  **D-67117 Limburgerhof (DE)**
- **SCHUMACHER, Gerhard**
  **D-69117 Heidelberg (DE)**

(74) Vertreter: **Kinzebach, Werner, Dr. et al Patentanwälte, Reitstötter, Kinzebach & Partner, Ludwigsplatz 4 67059 Ludwigshafen (DE)**

(56) Entgegenhaltungen:
EP-A- 0 767 180          EP-A- 0 865 821
DE-A- 4 419 518          DE-A- 19 529 599

**Beschreibung**

Die Erfindung betrifft ein Verfahren zur Verminderung des Restmonomerengehalts in einem flüssigen Polymersystem durch Nachpolymerisation unter Zugabe eines Redoxinitiatorsystems.

Bei der üblichen radikalisch initiierten Polymerisation von olefinisch ungesättigten Monomeren oder Monomermischungen geht die Polymerisationsreaktion meist nur bis zu einem Monomerenumsatz von 90 bis 99 Gew.%, unabhängig davon, ob die Polymerisation in Lösung, in Masse, in Suspension oder Dispersion durchgeführt wird. Dem Fachmann sind die Gründe für das unvollständige Abreagieren der Monomeren bekannt (Trommsdorf-Norrish-Effekt, Herabsetzung der Diffusionsgeschwindigkeit, Übertragungs- und Verzweigungsreaktionen etc.). Die dadurch im System zurückbleibenden unumgesetzten Monomeren ("Restmonomere") sind aus verschiedenen Gründen unerwünscht (Umsatzminderung, Polymerverunreinigung, Geruch, Toxizität und/oder Entflammbarkeit der Monomeren etc.). Es hat daher nicht an Versuchen gefehlt, die nach der Hauptpolymerisation verbleibende Restmonomerenmenge zu entfernen bzw. abzusenken. Dieser Verfahrensschritt soll nachstehend als Nachpolymerisation verstanden werden.

So ist u.a. bekannt, durch eine Behandlung mit Wasserdampf Restmonomere in einer Art von Wasserdampfdestillation zu entfernen (vgl.z.B. EP-A 327006, EP-A 650977 oder US-A 4 529 753). Die Behandlung ist jedoch aufwendig, sie ist nur bei wässrigen Systemen durchführbar, und ihr Erfolg ist von der Flüchtigkeit der zu entfernenden Monomeren abhängig. Es ist üblich, dem Ansatz nach der Hauptpolymerisation erneut Polymerisationsinitiatoren zuzusetzen und bei einer geeigneten Polymerisationstemperatur eine Nachbehandlung, eine sogenannte Nachpolymerisation, zur Verminderung der Restmonomerenmenge durchzuführen. Dafür ist die Zugabe von Redoxinitiatorsystemen vielfach beschrieben (vgl. z.B. US-A 4 289 823, EP-A 9258, EP-A 241127, EP-A 357287, EP-A 417 960, EP-A 455 379, EP-A 474415, EP-A 492847, EP-A 522791, EP-A 623659). Häufig wird eine zweimalige Nachbehandlung, in EP-A 9258 sogar eine dreimalige Nachbehandlung empfohlen, um Restmonomere auszupolymerisieren. Eine wiederholte Nachbehandlung ist aber unerwünscht, um den Polymerisationsreaktor möglichst schnell wieder für seine Hauptaufgabe einsetzen zu können. Auch die Vielzahl der im Stand der Technik empfohlenen Lösungsansätze zeigt, daß keine befriedigende Lösung vorhanden ist. Wie z.B. in der EP-A 279892 angegeben wird, hängt der Erfolg der entsprechenden Nachbehandlung auch von der Grösse des verwendeten Reaktors ab. So ist z.B. die Temperaturkontrolle und das Homogenisierungsverhalten von großen Produktionsreaktoren deutlich verschieden von dem von Laborreaktoren, und eine einfache Übertragung der beschriebenen Erfahrungen zur Restmonomerenminderung auf große Produktionsreaktoren ist in der Regel nicht möglich.

Der vorliegenden Erfindung liegt die Aufgabe zugrunde, ein in großem Maßstab durchführbares Verfahren für eine erfolgreiche Restmonomerenminderung durch Nachpolymerisation in einem Flüssigsystem in einem Produktionsreaktor, worunter ein Reaktor mit mehr als 20 und bevorzugt mehr als 100 Litern verstanden werden soll, zur Verfügung zu stellen.

Es wurde nun ein wirkungsvolles Verfahren zur Verminderung des Restmonomerengehalts einer flüssigen Lösung, Mischung, Schmelze, Suspension oder Dispersion eines durch radikalische Polymerisation hergestellten Polymers durch Nachpolymerisation unter Zugabe eines Redoxinitiatorsystems bei einer dafür geeigneten Reaktionstemperatur gefunden, das dadurch gekennzeichnet ist, daß man mindestens eine der zur Polymerisationsinitiierung der Restmonomeren benötigten Komponenten eines Redoxinitiators zu der Reaktionsmischung in einem Produktionsreaktor mit bestimmter, möglichst kurzer Mischzeit des Flüssigsystems im Produktionsreaktor, allmählich, portionsweise oder kontinuierlich, während einer Zeitdauer (Dosierzeit) zudosiert, die das etwa 10 bis 250 und insbesondere 20 bis 100 fache der Mischzeit des Flüssigsystems im Produktionsreaktor beträgt.

Ein wichtiger verfahrenstechnischer Parameter, der im Verfahren zur gezielten Verminderung der Restmonomeren im flüssigen Polymersystem eine Rolle spielt, ist die Mischzeit $\theta$ des Flüssigsystems im verwendeten Produktionsreaktor, worunter die benötigte Zeit verstanden wird, um durch Mischen und insbesondere Rühren einen bestimmten Homogenisierungsgrad zu erreichen. Zur Mischzeitbestimmung werden üblicherweise die Schlierenmethode und die chemische Entfärbungsmethode herangezogen. Bei der chemischen Entfärbungsmethode wird die Flüssigkeit mit einem Reaktionspartner versetzt und mit einem Indikator angefärbt. zu Beginn des Mischens bzw. Rührens wird dann der zweite Reaktionspartner zugegeben und der Zeitpunkt des Verschwindens der Färbung gemessen. Der beim Farbumschlag vorliegende Homogenisierungsgrad hängt vom Überschuß der zugegebenen Reaktionskomponente ab.

Die Mischzeit ist u.a. von der Reynoldszahl abhängig, die wiederum von der Reaktorform, der Drehzahl und dem Typ des Rührers, aber auch von der Dichte und Viskosität des Flüssigsystems abhängt. Eine Maßstabsübertragung der Mischzeit ist schwierig und stets mit Fehlern behaftet, da es keine zuverlässigen Literaturdaten zur Berechnung nicht-newtonischer Flüssigkeiten, wie Dispersionen, gibt. Für einfache Modellrechnungen gibt die Literatur (siehe z.B. Ullmanns Encyklopädie der techn. Chemie, 4. Auflage, Band 2, Seiten 259 ff, insbesondere Seiten 263-264 und Abb.9) idealisierte Zusammenhänge für Flüssigkeiten ohne Dichte- oder Viskositätsunterschiede an, die eine grobe Berechnung einer minimalen Mischzeit gestatten. Ausgehend von der Viskosität $\eta$ des Flüssigmediums, seiner Dichte $\varrho$, der Rührerdrehzahl n und des Rührerdurchmessers d kann unter Beachtung der Randbedingungen die Reynoldszahl des System berechnet und aus dieser die Mischzeit θ bestimmt werden:

$$Re = n\ d^2\ \varrho/\eta \quad (1)$$

$$n\ \theta = f\ (Re)$$

Analog dieser Gleichungen wurde für den Fall eines Ankerrührers und einer wässrigen Polymerdispersion der Viskosität von 30 mPas und einer Dichte von 1 g/cm$^3$ unter Berücksichtigung der geometrischen Ähnlichkeiten die Mischzeit für idealisierte Rührreaktoren (Labor-, Technikum-, Produktionsmaßstab) berechnet, deren Ergebnisse die nachstehende Tabelle zeigt. Die gewählten Rührdrehzahlen n sind an praktische Erfahrungen angelehnt. Mit steigendem Rührblattdurchmesser nimmt die Rührgeschwindigkeit und damit die Scherbeanspruchung des Rührgutes zu. Um einen vergleichbaren, konstanten Leistungseintrag in die verschieden grossen Reaktoren zu erhalten und um einen zu starken Anstieg der Umfangsgeschwindigkeit der Rührer zu vermeiden, ist es gängige Praxis, mit der Zunahme der Reaktorgröße die Drehzahl des Rührers zu reduzieren. Die nachfolgende Tabelle zeigt, daß die Mischzeit sich mit der Reaktorgröße verändert.

| Reaktor | Drehzahl n pro Sek. | Rührerdurchmesser (mm) | Umfangsgeschwindigkeit | ReZahl | Mischzeit (Sek.) |
|---|---|---|---|---|---|
| Labor | 2,5 | 110 | 860 | 1000 | 40 |
| Technikum | 1 | 1100 | 3400 | 40000 | 60 |
| Produktion | 0.666 | 2500 | 5200 | 140000 | 120 |

Eine einfache Übertragung der Nachbehandlungsverhältnisse aus dem Labormaßstab, wie er im Stand der Technik beschrieben ist, auf größere Rührbehälter ist daher nicht möglich.

Verändert sich das Höhe/Durchmesser-Verhältnis (H/D) der Reaktoren zu größerem Schlankheitsgrad der Reaktoren, wie es auch wegen der günstigen Wärmeabfuhr bevorzugt wird, so steigt die Mischzeit stark an. Für einen Kreuzbalkenrührer ist in Ullmann (loc.cit.) angegeben: $n\theta = 16{,}5 \times (H/D)^{2,6}$. Ist für einen Produktionsreaktor ein H/D-Wert von 2 bis 2,5 typisch, so steigt die Mischzeit um einen Faktor von 5 bis 10 an, obwohl der Kreuzbalkenrührer im Vergleich zu einem Ankerrührer ein besser mischender Rührer ist.

Nach dem erfindungsgemässen Verfahren soll das Flüssigsystem im Produktionsreaktor eine möglichst kurze Mischzeit aufweisen. Dazu ist neben einem langzeitigen Dosieren von mindestens einer der Komponenten des verwendeten Initiatorsystems für ein effektives Einrühren der zugesetzten Stoffe zu sorgen. Dies kann einmal durch eine geeignete Wahl der geometrischen Parameter des Produktionsreaktors, die Wahl eines sehr wirksamen Rührers mit geeigneten Drehzahlen oder von Kombinationen davon erfolgen. So kann eine Herabsetzung der Mischzeit durch Verwendung eines wandgängigen Wendelrührers oder Koaxialrührers erfolgen. Ferner ist dafür auch die Verwendung eines mehrstufigen wandgängigen Rührers mit starker axialer Mischwirkung geeignet. Dabei wird unter einem wandgängigen Rührer ein solcher verstanden, bei dem das Verhältnis Rührerdurchmesser zu Reaktordurchmesser, vermindert um die doppelte Breite eines ggf. vorhandenen Strombrechers, mindestens den Wert 0,9 erreicht. Jeder Rührer besitzt eine radiale, d.h. eine gegen die Reaktorwand gerichtete Strömungsrichtung, die axiale Strömungsrichtung ist dagegen bei vielen Rührern wenig ausgeprägt. Insbesondere durch die Verwendung eines mehrstufigen Rührers, bei dem entlang der axialen, vertikalen Rührerachse mehrere Rührer angebracht sind, wird die axiale Durchmischung verstärkt. Besonders bei der üblichen Einspeisung der Reaktionskomponenten von oben durch den Reaktordeckel oder von unten durch den Reaktorboden wird eine möglichst hohe axiale Durchmischung benötigt, um ein schnelles Einrühren zu erreichen und ein Abreagieren der Reaktionskomponente bereits während der Mischzeit herabzusetzen. Auch kann durch Verwendung eines wandgängigen MIGoder INTERMIG-Rührers, eines Impeller-, Propeller- oder Scheiben-Rührers oder eines wandgängigen Ankerrührers oder wandgängigen Gitterrührers die Mischzeit herabgesetzt werden. Dabei ist es oft vorteilhaft, die Wirkung des Rührers noch durch in den Produktionsreaktor eingebaute Strombrecher, Leitbleche oder andere Strömungsumlenkungen zu erhöhen.

Neben der Auswahl von Rührertyp und weiteren Reaktoreinbauten stellen Rührerdrehzahl, Viskosität, Dichte, Reagensart und -konzentration und die Dosierzeit wesentliche die Mischzeit beeinflussende optimierbare Faktoren dar. Die Viskosität des fluiden Mediums nimmt außerordentlich hohen Einfluß auf das Mischzeitverhalten des Reaktors. Aus diesem Grund können bei den Heterophasenpolymerisaten, d.h. Polymerdispersionen und Polymersuspensionen, besonders niedrige Mischzeiten realisiert werden, da diese Systeme deutlich geringere Viskositäten aufweisen als Lösungen oder Schmelzen.

Soll ein zugesetztes Agens wie eine zudosierte Komponente eines Initiatorsystems in einem gedachten Volumenteilelement der Reaktionsmasse mit einem Restmonomeren reagieren, muß das Agens unverbraucht dorthin gelangen. Treten zuvor Nebenreaktionen auf, so verlängert dies die Mischzeit, die bei schnellen Nebenreaktionen unendlich werden kann. Zur guten Durchmischung ist eine Dosierung während eines Zeitraums (Dosierzeit) notwendig, die in jedem Fall länger als die bestimmte Mischzeit des Flüssigsystems im verwendeten Produktionsreaktor ist. Gemäß dem erfindungsgemässen Verfahren soll die Dosierzeit das 10 bis 250 fache, insbesondere das 20 bis 100 fache und ganz besonders bevorzugt das 25 bis 50 fache der Mischzeit des Flüssigsystems im verwendeten Produktionsreaktor betragen. Bei Mischzeiten von 1 bis 30 Minuten entsprechen die vorstehenden Angaben in etwa Dosierzeiten von 10 Minuten bis 20 Stunden, insbesondere 20 Minuten bis 10 Stunden und bevorzugt 30 Minuten bis 5 Stunden.

Die Dosierzeit hängt aber auch von der Reaktionsgeschwindigkeit des verwendeten, Radikale freisetzenden Systems ab, von dessen Nebenreaktionen und allgemein von dessen Halbwertzeit bei der bei der Nachbehandlung angewandten Reaktionstemperatur. Bei hoher Reaktionstemperatur kann je nach Halbwertzeit des zerfallenden Initiators und eingestellten Systemparametern, z.B. pH-Wert, ein Teil des zugesetzten Initiators bereits während der Mischzeit zerfallen. So sollte die Dosierzeit mindestens der Summe von Halbwertzeit des Initiatorsystems bei der angewandten Reaktionstemperatur plus der 10 bis 20 fachen Mischzeit entsprechen. Bei Zweikomponenten-Redoxinitiatoren ist ferner zu beachten, daß insbesondere bei gleichzeitiger Zugabe der Komponenten bei höherer Konzentration der Komponente A an der Einspeisungsstelle von Komponente B die Komponente B ohne monomer-mindernde Wirkung abreagieren kann. So ist eine räumlich getrennte Zugabe der Oxidations- und der Reduktionskomponente für eine effektive Monomerminderung bei deren Abreaktion bedeutend, sofern nicht schon durch eine entsprechende zeitliche Dosierung der einzelnen Komponenten ein Aufbau grosser Konzentrationsgradienten vermieden wird. Besonders nachteilig ist ein Aufbau von Konzentrationsgradienten bezüglich der Komponente A und der Komponente B des Initiatorsystems am gleichen Reaktorende (oben oder unten), was zu einem schnellen, aber in der Restmonomerminderung sehr ineffektivem Abreagieren der Komponenten miteinander führen kann.

Das zudosieren mindestens einer der Initiatorkomponenten gemäß dem erfindungsgemässen Verfahren kann derart erfolgen, daß eine Lösung der zuzusetzenden Komponente in einem dünnen Strahl direkt auf die Oberfläche des Flüssigsystems im Reaktor gegeben wird. Bevorzugter ist jedoch, die spätere Zugabe der Komponente des Initiatorsystems zur Reaktionsmischung von unten durch eine Öffnung im Reaktorboden oder durch eine Öffnung in der Reaktorseitenwand vorzunehmen, insbesondere bei Verwendung eines wandgängigen Rührers. Die zudosierte Lösung tritt so in Zonen höchster Turbulenz ein. Besonders vorteilhaft ist eine Zudosierung über die Innenöffnung eines Hohlrührers, wobei die zudosierte Lösung permanent in die Zonen hoher Turbulenz geführt wird. Dagegen wird bei einer Zuführung durch eine Öffnung in der Reaktorseitenwand und einer Verwendung eines Ankerrührers nur dann ein Eintritt in eine turbulente Zone erreicht, wenn der Rührer gerade die Eintrittsöffnung in der Seitenwand passiert. Bevorzugt ist auch eine Dosierung über einen oberhalb des Flüssigsystems rotierenden Schaumzerstörer. Dabei zerstört dieser durch seine rotierende Bewegung mechanisch den durch das intensive Rühren und Vermischen gebildeten Schaum, wozu auch die Lösung beiträgt, die die Flüssigkeitsoberfläche berieselt.

Die Temperatur der Reaktionsmischung im Produktionsreaktor während des Zudosierens der letztzugegebenen Komponente richtet sich zum Teil nach dem verwendeten Redoxinitiatorsystem und seiner Halbwertzeit bei der Reaktionstemperatur.

Die Reaktionstemperatur liegt im allgemeinen bei 20 bis 140 °C, insbesondere bei 30 bis 120 °C und bei Dispersionen.und Suspensionen bevorzugt bei 30 bis 95 °C.

Das Verfahren ist praktisch mit allen üblichen Redoxinitiatorsystemen durchführbar, die besonders bei nicht so hohen Reaktionstemperaturen gut wirksam sind und, bei einer Nachbehandlung wässriger Polymerdispersionen oder -suspensionen, eine hinreichende Löslichkeit in wässrigen Systemen haben. Die neben dem Oxidationsmittel und dem Reduktionsmittel häufig mitverwendeten Metallionen werden dabei einer der Komponenten beigefügt oder liegen bereits homogen im Reaktionsmedium verteilt vor, z.B. als Komponente aus der Hauptpolymerisation. Beispiele für die Redox-Reaktion katalysierende Metalle sind Salze und Komplexe von Eisen, Kupfer, Mangan, Silber, Platin, Vanadium, Nickel, Chrom, Palladium oder Cobalt, wobei die Metalle jeweils in verschiedenen Oxidationsstufen vorliegen können. Beispiele geeigneter Oxidationskomponenten der Redoxsysteme sind wasserlösliche Hydroperoxide, tert.-Butylhydroperoxid, Cumolhydroperoxid, Wasserstoffperoxid oder ein Ammonium- oder Alkalisalz der Peroxydischwefelsäure.

Beispiele geeigneter Reduktionsmittel sind Ascorbinsäure, Isoascorbinsäure, organische Verbindungen mit Thiol- oder Disulfid-Gruppen, reduzierende anorganische Alkali- und Ammoniumsalze von schwefelhaltigen Säuren, wie Natriumsulfit, -disulfit, -thiosulfat, -hydrosulfit, -sulfid, - hydrosulfid oder -dithionit, Formamidinsulfinsäure, Hydroxymethansulfinsäure, Acetonbisulfit, Amine wie Ethanolamin oder Endiole. Auch bei Normalbedingungen gasförmige Oxidationsmittel wie Sauerstoff, Ozon oder Luft oder gasförmige Reduktionsmittel wie Schwefeldioxid lassen sich als Reaktionskomponenten des Redoxsystems verwenden. Die Komponenten des Redoxsystems lassen sich gleichzeitig oder nacheinander der Reaktionsmischung zudosieren (z.B. beide von oben, eine von oben, eine von unten), wobei eine räumlich getrennte Zugabe (Reaktordeckel, Reaktorboden, Reaktorseitenwand) sehr vorteilhaft ist. Es ist auch möglich, daß die Reaktionsmischung bereits aus der Phase der Hauptpolymerisation, die im allgemeinen bis zu einem Monomerenumsatz von 90, insbesondere 95 und bevorzugt von 99 Gew.-% geführt wird, noch hinreichend Oxydationsmittel, Reduktionsmittel oder Metallkatalysator enthält, so daß bei der Nachbehandlung nur noch die fehlende Komponente in hinreichender Menge zudosiert werden muß. Zu den Mengen der verwendeten Redoxinitiator-Komponenten sei bemerkt, daß üblicherweise Mengen von 0,01 bis 0,5, insbesondere 0,05 bis 0,4 und bevorzugt 0,2 bis 0,3 Gew.-%, bezogen auf die Gesamtmasse der für die Hauptpolymerisation eingesetzten Monomeren verwendet werden.

Anstelle von Redoxsystemen können als Radikalquelle auch Initiatoren wie Dialkyl- oder Diacylperoxide, Azoverbindungen, Perketale oder Peracetale verwendet werden, oder durch energiereiche Bestrahlung oder durch Ultraschall erzeugte Radikale.

Das erfindungsgemässe Verfahren eignet sich besonders zur Verminderung der Restmonomeren in flüssigen Systemen von Acrylat-, Methacrylat- (Ester der Acrylsäure od. Methacrylsäure mit $C_1$-$C_{12}$-Alkanolen, insbesondere $C_1$-$C_8$-Alkanolen, wobei Methyl-, Ethyl-, n-Butyl und 2-Ethylhexylacrylat und -methacrylat besonders bevorzugt sind), Styrol-, Vinylchlorid- oder Vinylacetat-Copolymeren, wie Styrol-Butadien-Copolymerisaten oder Ethylen-Vinylacetat-Copolymerisaten. Neben den Hauptmonomeren der genannten Art können die für die Polymerisation verwendeten Monomerengemische auch in kleineren Mengen, insbesondere 0,01 bis 10 Gew.-% der Gesamtmonomerenmenge, polare Monomere wie z.B. Acrylsäure, Methacrylsäure, Methacrylamid, Acrylamid und/oder deren N-Methylolderivate, Maleinsäure oder deren Anhydrid oder Hydroxyalkyl(meth)acrylate enthalten. Besonders geeignet ist das Verfahren zur Herabsetzung von Restmonomeren in wässrigen Dispersionen.

Die Herstellung der erfindungsgemäß für eine Nachbehandlung verwendeten Polymeren ist dem Fachmann aus der Fachliteratur bekannt.

Die nachstehenden Beispiele sollen die Erfindung erläutern, aber nicht beschränken. Soweit nicht anders angegeben, beziehen sich Teile und Prozente auf das Gewicht. Die in den Beispielen angegebenen Restmonomermengen wurden durch Gaschromatographie (GC) ermittelt. Die Feststoffgehalte (FG) wurden nach Eintrocknen gravimetrisch bestimmt. Der LD-Wert ist die Lichtdurchlässigkeit, einer 0,01 gew.%igen Probe der entsprechenden Polymerdispersion einer Schichtdicke von 25 mm im Vergleich zu reinem Wasser. Die Teilchengewichtsverteilung (TGV) wurde durch kapillarhydrodynamische Fraktionierung oder mit Hilfe einer Ultrazentrifuge bestimmt.

Die Viskosität der Dispersionen (mPas) wurde mit einem handelsüblichen Rotationsviskosimeter (Rheomat) bei einer Scherrate von 500/Sekunde ermittelt.

Beispiel 1

1a. In einem 1,3 m³ Produktionsreaktor mit einem Ankerrührer (Verhältnis von Rührblatt- zu Reaktordurchmesser d/D: 0,7; Rührerdrehzahl: 50 Umdrehungen pro Minute), dessen Metallteile elektropoliert waren, wurden 317 kg Wasser und 4,4 kg Emulgator (EM) vorgelegt und mit 2 % der nachstehenden Monomeremulsion ME1 versetzt.

| Monomeremulsion ME1: | |
|---|---|
| 65 kg | Wasser |
| 14,6 kg | einer 28 %igen wässrigen Emulgatorlösung eines neutralisierten $C_{12}$-$C_{14}$-Fettalkoholethersulfaten mit 3 Mol Ethylenoxid |
| 0,5 kg | Natronlauge (50%) |
| 54,7 kg | Methacrylamid (15 %ig) |
| 54,7 kg | N-Methylolmethacrylamid (15 %ig) |
| 12,3 kg | Methacrylsäure |
| 65,6 kg | Methylmethacrylat |
| 373,1 kg | n-Butylacrylat |

Danach wurde auf 80 °C erhitzt und 10% einer Initiatorlösung aus 1,23 kg Natriumpersulfat in 48 kg Wasser zugegeben. Nach 5 Minuten wurde der Rest der Monomeremulsion während 2 Stunden, der Rest der Initiatorlösung während 2,5 Stunden zugegeben und danach der Polymerisationsansatz noch eine Stunde im Reaktor bei 80 °C gehalten. Dann wurde eine Probe A entnommen und deren Restmonomerenanteil gaschromatographisch bestimmt (Probe 1A). Die Viskosität der Dispersion betrug ca. 30 mPas. Die Mischzeit des Reaktors betrug 1,2 Minuten.

1b. Nachbehandlung:

Ein Zulauf IA, bestehend aus 11,5 kg einer 9 %-igen wässrigen Lösung von tert.-Butylhydroperoxid, sowie ein Zulauf IB, bestehend aus einer Mischung von 18,6 kg Wasser, 0,58 kg Natriumdisulfit und 0,33 kg Aceton, wurden gleichzeitig während einer Dosierzeit von 3 Minuten auf gegenüberliegenden Seiten durch den Reaktordeckel der Reaktionsmischung zudosiert. Dabei wurde der Ansatz in 90 Minuten auf 30 °C abgekühlt und nach 20, 40, 60, und 90 Minuten jeweils eine Produktprobe zur gaschromatischen Bestimmung des Restmonomerengehalts entnommen (Proben 1B, 1C, 1D, 1E). Nach den 90 Minuten wurde der Ansatz mit 25 %-igem wässrigem Ammoniak neutralisiert und durch ein 125 µm Filter filtriert. Es wurde eine koagulatfreie Polymerdispersion mit einem Feststoffgehalt von 40,2%, einem LD-Wert von 92% und einem pH-Wert von 7,2 erhalten. Die Teilchengewichtsverteilung ist monomodal bei enger Verteilung. Ca. 1 Stunde nach der Fertigstellung der nachbehandelten Polymerdispersion wurde erneut eine Probe (Probe 1F) für die Ermittlung des Restmonomerengehalts entnommen. Die bestimmten Restmonomerengehalte der Proben 1A - 1F zeigt Tabelle 1.

Beispiel 2

2a. Es wurde genau wie in Beispiel 1a angegeben verfahren und eine Probe 2A entnommen.

2b. Nachbehandlung:

Es wurde wie in Beispiel 1b angegeben verfahren, jedoch wurde ein Zulauf IIA, der dem Zulauf IA entsprach, während einer Zeitdauer von 5 Minuten durch den Reaktordeckel der Reaktionsmischung zudosiert und 5 Minuten lang in diese eingerührt. Ein Zulauf IIB (Reduktionsmittel), der dem Zulauf IB in seiner Zusammensetzung entsprach, wurde während einer Dosierzeit von 90 Minuten während der Abkühlzeit von 90 Minuten stetig der Reaktionsmischung zudosiert. Wie in Beispiel 1b angegeben, wurden Proben für die Ermittlung des Restmonomerengehalts entnommen (Proben 2B, 2C, 2D, 2E, 2F). Die Ermittlungsergebnisse zeigt Tabelle 1.

Beispiel 3

3a. Es wird wie in Beispiel 1a angegeben verfahren und eine Probe zur Restmonomerenbestimmung entnommen (Probe 3A).

3b. Nachbehandlung:

Es wird wie in Beispiel 1b angegeben verfahren, jedoch ein Zulauf IIIA, der dem Zulauf IA entsprach, während 5 Minuten durch den Reaktordeckel der Reaktionsmischung zudosiert, und dann 5 Minuten in diese eingerührt. Ein Zulauf IIIB, der dem zulauf IB entsprach, wurde während des 1,5 stündigen Abkühlens von 80 °C auf 30 °C durch den Reaktorboden zudosiert (Dosierzeit 90 Minuten). Wie in Beispiel 1b angegeben wurden Proben zur Ermittlung des Restmonomerengehalts genommen (Proben 3B, 3C, 3D, 3E, 3F). Die Ergebnisse zeigt Tabelle 1.

Beispiel 4

4a. Es wurde wie in Beispiel 1a angegeben verfahren und eine Probe zur Bestimmung der Restmonomerenmenge entnommen (Probe 4A).

4b. Nachbehandlung:

Es wurde wie in Beispiel 1b angegeben verfahren, jedoch wurden ein Oxydationsmittelzulauf IVA, der in seiner Zusammensetzung dem Zulauf IA entsprach, sowie ein Reduktionsmittelzulauf IVB, der in seiner Zusammensetzung dem Zusatz IB entsprach, gleichzeitig während der 1,5 stündigen Abkühlzeit stetig auf gegenüberliegenden Seiten durch den Reaktordeckel von oben der Reaktionsmischung zudosiert (Dosierzeit beider Zuläufe je 90 Minuten). Wie in Beispiel 1b angegeben, wurden Proben zur Bestimmung der Restmonomerenmenge entnommen (Proben 4B, 4C, 4D, 4E, 4E). Die Ergebnisse zeigt Tabelle 1.

Beispiel 5

5a. Es wurde wie in Beispiel 1a angegeben verfahren, jedoch wurde die Monomerenemulsion ME während 4 Stunden und die Initiatorlösung während 4,5 Stunden zudosiert und danach der Ansatz noch 30 Minuten bei der Polymerisationstemperatur gehalten. Wie in Beispiel 1a angegeben, wurde eine Probe zur Ermittlung des Restmonomergehalts nach der Hauptpolymerisation entnommen (Probe 5A).

5b. Nachbehandlung:
Es wurde wie in Beispiel 1b verfahren, jedoch wurden die Zuläufe der Redoxinitiator-Komponenten VA und VB, die den Zuläufen IA und IB entsprechen, gleichzeitig, aber räumlich getrennt auf gegenüberliegenden Seiten von oben durch den Reaktordeckel während einer Dosierzeit von 60 Minuten in die auf 80 °C erhitzte Reaktionsmischung dosiert. Nach 20, 40 und 60 Minuten Dosierzeit wurden Proben aus der Reaktionsmischung zur Ermittlung des Restmonomerengehalts entnommen (Proben 5B, 5C, 5D). Die Ergebnisse gibt Tabelle 1 wieder.

Beispiel 6

6a. Es wurde wie in Beispiel 1a angegeben verfahren, sowie eine Probe (Probe 6A) zur Restmonomerenbestimmung entnommen.

6b. Nachbehandlung:
Es wurde wie in Beispiel 1b angegeben verfahren. Bei den Zuläufen der Redoxinitiator-Komponenten wurde der Zulauf VIA, der dem Zulauf IA entspricht, der 80 °C warmen Reaktionsmischung von oben durch den Reaktordeckel während 15 Minuten zudosiert. Danach wurde die Reaktionsmischung auf 30 °C abgekühlt. Zulauf VIB, der in seiner Zusammensetzung dem Reduktionsmittel von Zulauf IB entspricht, wurde während einer Dosierzeit von 120 Minuten von oben durch den Reaktordeckel der Reaktionsmischung zudosiert. Nach 20, 40, 60, 90 und 120 Minuten wurden Proben zur Ermittlung des Restmonomerengehalts entnommen (Proben 6B, 6C, 6D, 6E, 6F). Die Ergebnisse gibt Tabelle 1 wieder.

Tabelle 1:

| Zugabeart und -zeit von tert.-Butylhydroperoxidlösung (Ox) und Acetonbisulfitlösung als Reduktionsmittel (Red) bei der Nachbehandlung sowie Restmonomergehalte an n-Butylacrylat (BA) und Methylmethacrylat (MMA) der vor während und nach der Nachbehandlung entnommenen Produktproben | | | | | |
|---|---|---|---|---|---|
| | Bsp.1 | Bsp.2 | Bsp.3 | Bsp.4 | Bsp.5 | Bsp.6 |
| Zugabe Ox: | | | | | | |
| Ort | oben | oben | oben | oben | oben | oben |
| Dauer(Min.) | 3 | 5 | 5 | 90 | 60 | 15 |
| Zugabe Red | | | | | | |
| Ort | oben | oben | unten | oben | oben | oben |
| Dauer(Min.) | 3 | 90 | 90 | 90 | 60 | 120 |
| Zugabe | | | | | | |
| gleichzeitig | + | - | - | + | + | - |
| nacheinander | - | + | + | - | - | + |
| Proben A Ausgangswert | (1A) | (2A) | (3A) | (4A) | (5A) | (6A) |
| BA (ppm) | 2800 | 2800 | 3000 | 2600 | 2800 | 3000 |
| MMA (ppm) | 20 | 10 | 20 | 10 | 20 | 10 |

# EP 1 021 468 B1

Tabelle 1: (fortgesetzt)

| Zugabeart und -zeit von tert.-Butylhydroperoxidlösung (Ox) und Acetonbisulfitlösung als Reduktionsmittel (Red) bei der Nachbehandlung sowie Restmonomergehalte an n-Butylacrylat (BA) und Methylmethacrylat (MMA) der vor während und nach der Nachbehandlung entnommenen Produktproben | | | | | | |
|---|---|---|---|---|---|---|
| | Bsp.1 | Bsp.2 | Bsp.3 | Bsp.4 | Bsp.5 | Bsp.6 |
| Proben B nach 20 Min. | (1B) | (2B) | (3B) | (4B) | (5B) | (6B) |
| BA (ppm) | 1500 | 1600 | 850 | 2100 | 1500 | 1300 |
| MMA (ppm) | 15 | <10 | <10 | 15 | <10 | <10 |
| Proben C nach 40 Min. | (1C) | (2C) | (3C) | (4C) | (5C) | (6C) |
| BA (ppm) | 1300 | 1000 | 580 | 2100 | 540 | 580 |
| MMA (ppm) | 10 | <10 | <10 | 10 | <10 | <10 |
| Proben D nach 60 Min. | (1D) | (2D) | (3D) | (4D) | (5D) | (6D) |
| BA (ppm) | 1100 | 830 | 180 | 1300 | 170 | 320 |
| MMA (ppm) | 10 | <10 | <10 | 10 | <10 | <10 |
| Proben E nach 90 Min. | (1E) | (2E) | (3E) | (4E) | (5E) | (6E) |
| BA (ppm) | 1100 | 480 | 100 | 370 | - | 150 |
| MMA (ppm) | <10 | <10 | <10 | <10 | - | <10 |
| Proben F nach ≥120 Min. | (1F) | (2F) | (3F) | (4F) | (5F) | (6F) |
| BA (ppm) | 1050 | 480 | 100 | 300 | - | 140 |
| MMA (ppm) | <10 | <10 | <10 | <10 | - | <10 |

Beispiele 7 bis 12 und Vergleichsversuch VV

Nachbehandlung höherkonzentrierter Polymerdispersionen mit unterschiedlichen Redoxsystemen und Zugabearten:

7-12a. Herstellung höherkonzentrierter Polymerdispersionen

Es wurde eine Monomerenemulsion 7-12V der folgenden Zusammensetzung hergestellt:

| | |
|---|---|
| 90 kg | Wasser |
| 18 kg | Natriumsalz der Dodecylbenzolsulfonsäure als 15%ige wässrige Lösung |
| 0,082 kg | Eisen(II)-sulfat-Heptahydrat |
| 0,70 kg | tert.Dodecylmercaptan |
| 38 kg | N-Methylolmethacrylamid (15%ig) |
| 29 kg | Acrylnitril |
| 6 kg | Acrylsäure |
| 539 kg | n-Butylacrylat |

In einem mit einem Ankerrührer ausgerüsteten Kessel mit einem Volumen von 1,6 m$^3$, der zu 2/3 gefüllt ist und ein Verhältnis von Flüssigkeitshöhe zu Reaktordurchmesser von h/D=0,88 hat, wurden 105 kg Wasser vorgelegt, unter Rühren mit 40 UpM aufgeheizt und mit 0,5% der Monomeremulsion 7-12V versetzt. Nach einer Minute Rühren wurden 20 % einer Lösung von 2,9 kg Natriumpersulfat in 110 kg Wasser zugegeben. Nach 10 Minuten wurde begonnen, den Rest der Monomeremulsion 7-12V und den Rest der Initiatorlösung während 4 Stunden kontinuierlich zuzugeben. Nach vollständiger Zugabe wurde eine Probe (Probe A) entnommen.

7-12b. Nachbehandlung der Polymerdispersionen nach den Beispielen 7-12 und Vergleichsversuch (VV)

Die hergestellten Polymerdispersionen wurden jeweils mit 11,5 kg einer 10 %igen Lösung von tert.Butylhydroperoxid versetzt. Danach wurde jeweils eine Lösung der folgenden Reduktionsmittels während 2 Stunden zudosiert:
Vergleichsversuch VV: Wasser ohne Reduktionsmittel

| Beispiel 7: | 18 %ige wässrige Lösung von Ascorbinsäure |
|---|---|
| Beispiel 8: | 18 %ige wässrige Lösung von Ascorbinsäure |
| Beispiel 9: | 18 %ige wässrige Lösung von Rongalit® C. |
| Beispiel 10: | Mischung 10%ige Natriumdisulfitlösung mit Aceton (Gewichtsverhältnis 15:1) (ABS) |
| Beispiel 11: | 16 %ige wässrige Mercaptoethanollösung (HO-CH$_2$-CH$_2$-SH) (ME) |
| Beispiel 12: | 1,2 %ige Formamidinsulfinsäurelösung (FAS) |

Während der Zugabe wurden jeweils nach 30, 60 und 120 Minuten eine Probe entnommen, in denen der Gehalt an den Restmonomeren n-Butylacrylat (BA) und Acrylnitril (AN) gaschromatographisch bestimmt wurde. Nach der Abkühlung wurden die nachbehandelte Polymerdispersion mit einer 25 %-igen wäßrigen Ammoniaklösung auf einen pH-Wert von etwa 7,5 eingestellt. Die Beispiele und deren Ergebnisse sind in den Tabellen 2 und 3 zusammengestellt.

Tabelle 2

| | VV | Bsp.7 | Bsp.8 | Bsp.9 | Bsp.10 | Bsp.11 | Bsp.12 |
|---|---|---|---|---|---|---|---|
| **Red.mittel:** | | | | | | | |
| ohne | + | - | - | - | - | - | - |
| Ascorbins. | - | + | + | - | - | - | - |
| Rongalit C | - | - | - | + | - | - | - |
| ABS | - | - | - | - | + | - | - |
| ME | - | - | - | - | - | + | - |
| FAS | - | - | - | - | - | - | + |
| **Red-Zugabe** | | | | | | | |
| Ort | oben | unten | oben | unten | oben | unten | oben |
| Dauer(Stdn.) | 2 | 2 | 2 | 2 | 2 | 2 3 | 2 |
| **Teile pro 100** | | | | | | | |
| Teile Monomer | - | 0,20 | 0,20 | 0,2 | 0,26 | 0,3 | 0,25 |
| Feststoffgehalt (%) | 59,7 | 60,2 | 59,1 | 59,9 | 59,6 | 59,1 | 51,9 |
| pH-Wert | 7,3 | 7,2 | 7,7 | 7,5 | 7,7 | 7,3 | 7,8 |
| LD-Wert | 25% | 26% | 28% | 26% | 29% | 23% | 23% |
| Visk.mPas | - | 105 | 42 | 42 | 72 | 84 | 15 |
| Koagulat kg | 0,01 | 0,01 | 0,25 | 0,50 | 0,02 | 0,05 | 0,50 |

Tabelle 3

| Gehalte an Restmonomeren n-Butylacrylat (BA) und Acrylnitril (AN) in ppm der vor, während und nach der Nachbehandlung entnommenen Produktproben | | | | | | | |
|---|---|---|---|---|---|---|---|
| | VV | Bsp.7 | Bsp.8 | Bsp.9 | Bsp.10 | Bsp.11 | Bsp.12 |
| **Proben A** | | | | | | | |
| **Start** | | | | | | | |
| BA (ppm) | 42000 | 55000 | 43000 | 43000 | 35000 | 44000 | 49000 |
| AN (ppm) | 2050 | 2400 | 2000 | 21000 | 1800 | 1800 | 2800 |

Tabelle 3 (fortgesetzt)

| Gehalte an Restmonomeren n-Butylacrylat (BA) und Acrylnitril (AN) in ppm der vor, während und nach der Nachbehandlung entnommenen Produktproben | | | | | | |
|---|---|---|---|---|---|---|
| | VV | Bsp.7 | Bsp.8 | Bsp.9 | Bsp.10 | Bsp.11 | Bsp.12 |
| Proben B | | | | | | |
| (30 Min.) | | | | | | |
| BA (ppm) | 40000 | 15000 | 13000 | 13000 | 7200 | 18000 | 15000 |
| AN (ppm) | 2000 | 690 | 600 | 470 | 270 | 810 | 880 |
| Proben C | | | | | | |
| (60 Min.) | | | | | | |
| BA (ppm) | 39000 | 10000 | 5700 | 7800 | 2400 | 6400 | 5600 |
| AN (ppm) | 1950 | 430 | 230 | 340 | 20 | 220 | 230 |
| Proben D | | | | | | |
| (120 Min.) | | | | | | |
| BA (ppm) | 39000 | 610 | 660 | 1300 | 230 | 1000 | 580 |
| AN (ppm) | 1900 | 10 | 10 | 30 | <10 | <10 | <10 |
| Proben E | | | | | | |
| Endwerte | | | | | | |
| BA (ppm) | 38000 | 600 | 610 | 1200 | 230 | 850 | 290 |
| AN (ppm) | 1800 | <10 | <10 | 20 | <10 | <10 | <10 |

**Patentansprüche**

1. verfahren zur Verminderung des Restmonomerengehalts in einer flüssigen Lösung, Mischung, Schmelze, Suspension oder Dispersion eines durch radikalische Polymerisation hergestellten Polymers (Flüssigsystem) durch Nachpolymerisation unter Zugabe eines Redoxinitiatorsystems bei einer dafür geeigneten Reaktionstemperatur, **dadurch gekennzeichnet, daß** man dem in einem Produktionsreaktor mit mehr als 20 Litern und bestimmter, möglichst kurzer Mischzeit befindlichen Flüssigsystem mindestens eine der zur Polymerisation der Restmonomeren benötigten Redoxinitiator-Komponenten allmählich während einer Zeitdauer (Dosierzeit) zudosiert, die das etwa 10 bis 250-fache der Mischzeit des Flüssigsystems im Reaktor beträgt.

2. Verfahren nach Anspruch 1, **dadurch gekennzeichnet, daß** man vor oder beim Zudosieren mindestens einer der Initiatorkomponenten Maßnahmen zur Herabsetzung der Mischzeit des Flüssigsystems im Produktionsreaktor durchführt.

3. Verfahren nach Anspruch 1 oder 2, **dadurch gekennzeichnet, daß** die Zugabe von Oxydations- und Reduktionskomponente des Initiatorsystems in das Flüssigsystem räumlich voneinander getrennt und gleichzeitig oder nacheinander erfolgt.

4. Verfahren nach Anspruch 3, **dadurch gekennzeichnet, daß** man eine der Komponenten des Initiatorsystems von oben in den Produktionsreaktor und die andere durch den Boden des Produktionsreaktors zugibt.

5. Verfahren nach einem der Ansprüche 1 bis 4, **dadurch gekennzeichnet, daß** die Mischzeit des Flüssigsystems im Produktionsreaktor durch Verwendung eines mehrstufigen wandgängigen Rührers mit starker axialer Mischwirkung im Reaktor herabgesetzt wird.

6. Verfahren nach einem der Ansprüche 1 bis 5, **dadurch gekennzeichnet, daß** zur Herabsetzung der Mischzeit des Flüssigsystems der Produktionsreaktor ein oder mehrere Rührer sowie Leitbleche, Strombrecher oder Strömungsumlenkungen aufweist.

7. Verfahren nach einem der Ansprüche 1 bis 6, **dadurch gekennzeichnet, daß** die Dosierzeit das 20 bis 100 fache der Mischzeit des Flüssigsystems im Produktionsreaktor beträgt.

8. Verfahren nach einem der Ansprüche 1 bis 7, **dadurch gekennzeichnet, daß** die zu vermindernden Restmonomeren Ester der Acrylsäure, Ester der Methacrylsäure, Acrylnitril und/oder Methacrylnitril sind.

**Revendications**

1. Procédé de réduction de la teneur en monomères résiduels dans une dispersion, une suspension, une masse fondue, un mélange ou une solution liquides d'un polymère (système liquide) que l'on a préparé au moyen d'une polymérisation par voie radicalaire, au moyen d'une polymérisation ultérieure en ajoutant, à une température de réaction qui est appropriée à cette fin, un système initiateur d'oxydo-réduction, **caractérisée en ce que** l'on ajoute graduellement en dosant, au système liquide situé dans un réacteur de production de plus de 20 litres et présentant un temps de mélange défini qui est le plus court possible, au moins un composant initiateur d'oxydo-réduction qui est nécessaire pour la polymérisation des monomères résiduels, pendant une durée (temps de dosage) qui est comprise entre 10 fois le temps de mélange et 250 fois le temps de mélange du système liquide dans le réacteur.

2. Procédé selon la revendication 1, **caractérisé en ce que** l'on prend des mesures afin de réduire le temps de mélange du système liquide dans le réacteur de production, avant ou pendant l'ajout en dosant au moins un des composants initiateurs.

3. Procédé selon la revendication 1 ou 2, **caractérisé en ce que** l'on procède à l'ajout du composant d'oxydo-réduction du système initiateur du système liquide, simultanément ou successivement mais de manière séparée dans l'espace.

4. Procédé selon la revendication 3, **caractérisé en ce que** l'on ajoute dans le réacteur de production, l'un des composants du système initiateur par le haut et l'autre par le fond du réacteur de production.

5. Procédé selon l'une quelconque des revendications 1 à 4, **caractérisé en ce que** l'on réduit le temps de mélange du système liquide dans le réacteur de production au moyen de l'emploi d'un agitateur à plusieurs dispositifs d'agitation présentant une forte action de mélange axiale et tournant le long des parois.

6. Procédé selon l'une quelconque des revendications 1 à 5, **caractérisé en ce que** le réacteur de production présente un ou plusieurs agitateurs ainsi que des tôles de guidage, des dispositifs de rupture de courant ou des dispositifs de retournement d'écoulement, afin de réduire le temps de mélange du système liquide.

7. Procédé selon l'une quelconque des revendications 1 à 6, **caractérisé en ce que** la durée de dosage est comprise entre 20 fois le temps de mélange et 100 fois le temps de mélange du système liquide dans le réacteur.

8. Procédé selon l'une quelconque des revendications 1 à 7, **caractérisé en ce que**, les monomères résiduels destinés à être réduits en nombre, sont des esters de l'acide acrylique, des esters de l'acide méthacrylique, l'acrylonitrile et/ou le méthacrylonitrile.

**Claims**

1. A process for reducing the residual monomer content in a liquid solution, mixture, melt, suspension or dispersion of a polymer prepared by free-radical polymerization (liquid system) by postpolymerization with addition of a redox initiator system at a reaction temperature appropriate to it, which comprises gradually metering at least one of the redox initiator components required to initiate polymerization of the residual monomers into the liquid system in a production reactor with a capacity of more than 20 liters and a defined and extremely short mixing time over a period (metering time) which is from about 10 to 250 times the mixing time of the liquid system in said reactor.

2. A process as claimed in claim 1, wherein measures to reduce the mixing time of the liquid system in the production reactor are taken before or during the metered addition of at least one of the initiator components.

3. A process as claimed in claim 1 or 2, wherein the addition of oxidation and reduction component of the initiator system to the liquid system takes place at spatially separate locations and simultaneously or in succession.

4.  A process as claimed in claim 3, wherein one of the components of the initiator system is added to the production reactor from above and the other through the floor of said reactor.

5.  A process as claimed in any of claims 1 to 4, wherein the mixing time of the liquid system in the production reactor is reduced by using a multistage close-clearance stirrer with a strong axial mixing effect in the reactor.

6.  A process as claimed in any of claims 1 to 5, wherein the mixing time of the liquid system is reduced by the production reactor having one or more stirrers and also guide vanes, flow disruptors or flow diverters.

7.  A process as claimed in any of claims 1 to 6, wherein the metering time is from 20 to 100 times the mixing time of the liquid system in the production reactor.

8.  A process as claimed in any of claims 1 to 7, wherein the residual monomers whose content is to be reduced are esters of acrylic acid, esters of methacrylic acid, acrylonitrile and/or methacrylonitrile.